# EUROPEAN PATENT SPECIFICATION

(11) **EP 2 674 830 B1**
(45) Date of publication and mention of the grant of the patent: **08.02.2017**
(21) Application number: 12172075.9
(22) Date of filing: 14.06.2012
(51) Int. Cl.: G06F 1/16, G06F 3/02, H04M 1/02

(54) **A storable keyboard having a pivoting cover**
Verstaubare Tastatur mit einer drehbaren Abdeckung
Clavier stockable ayant un couvercle pivotant

(43) Date of publication of application: 18.12.2013
(73) Proprietor: BlackBerry Limited, Waterloo, ON N2K 0A7 (CA)
(72) Inventor: Griffin, Jason Tyler, Waterloo, Ontario N2L 3W8 (CA); Riddiford, Martin Philip, Dulwich, Greater London SE21 7DF (GB)
(74) Representative: Greenaway, Martin William

(56) References cited:
- EP-A1- 2 259 558
- WO-A1-2008/074358
- US-A- 5 534 891

## Description

### Field of Technology

The present disclosure relates to electronic devices and more particularly to keyboards.

### Background

Data and instruction-entry keyboards of various kinds are known in the art. Keyboards are typically comprised of a plurality of keycaps (such as depressible buttons, touch-sensitive surfaces, and so forth) that permit a user to selectively enter any of a variety of alphanumeric characters and/or to input corresponding instructions or selections. Two common examples in these regards are the so-called QWERTY keyboard and the so-called telephone keypad.

Small portable communication devices (such as so-called smartphones) often include a keyboard. To minimize the device's footprint those keyboards are sometimes disposed on a lower plane than the device's display. In these cases the display and the keyboard sometimes slide parallel to one another to bring the keyboard into a deployed position. In some other cases the keyboard comprises two or more multi-row segments that pivot in a planar fashion with respect to one another to permit the keyboard segments to be stored, again parallel to the device's display, as a stack of planar members within the device.

European Patent Application No. 2259558 discloses a clamshell or slide type of handheld wireless communication device that can include a biasing component to raise or lower a keyboard relative to a first housing of the device.

United States Patent No. 5534891 discloses an electronic device comprising a cover pivotally coupled to a housing, wherein the cover comprises a display unit and the housing comprises a keyboard. A spring loaded mechanism pivots the keyboard to an inclined state when the cover is opened.

Aspects of an invention are defined in the independent claims. Some optional features are defined in the dependent claims.

### Brief Description of the Drawings

FIG. 1 is a perspective view in accordance with the disclosure.
FIG. 2 is a side-elevational partially-transparent detail view in accordance with the disclosure.
FIG. 3 is a side-elevational partially-transparent detail view in accordance with the disclosure.
FIG. 4 is a side-elevational partially-transparent detail view in accordance with the disclosure.
FIG. 5 is a side-elevational partially-transparent detail view in accordance with the disclosure.
FIG. 6 is a perspective view in accordance with the disclosure.
FIG. 7 is a side-elevational partially-transparent detail view in accordance with the disclosure.
FIG. 8 is a side-elevational partially-transparent detail view in accordance with the disclosure.
FIG. 9 is a side-elevational partially-transparent detail view in accordance with the disclosure.
FIG. 10 is a side-elevational partially-transparent detail view in accordance with the disclosure.
FIG. 11 is a block diagram in accordance with the disclosure.

### Detailed Description

The following describes an apparatus pertaining to a keyboard portion that is configured to move (with respect to a housing) between a deployed position and a non-deployed position. A cover pivotally couples to the housing and is configured to at least partially cover the keyboard portion when the keyboard portion is in the non-deployed position and to reveal the keyboard portion when the keyboard portion is in the deployed position. By one approach the cover is configured to move the keyboard portion between the deployed position and the non-deployed position as the cover pivots with respect to the housing.

By one approach the entire keyboard is hidden from view when stored in the non-deployed position. By another approach a part of the keyboard (such as a second portion of the keyboard from that referred to above) remains revealed and available even when the first portion of the keyboard is stored in the deployed position.

By one approach an end of the keyboard portion slides along a guide that comprises an interior part of the housing during at least part, but not all, of a transition from the non-deployed position to the deployed position. By one approach, in lieu of the foregoing or in combination therewith, a support surface that comprises a part of the cover contacts the keyboard portion to provide vertical support when that keyboard portion is in the deployed position.

So configured, a corresponding device such as a portable communication device can have both a small footprint when the keyboard portion is non-deployed while also offering an integral keyboard portion that can be readily and easily deployed when needed. These teachings will accommodate stowing all, or only a portion, of a given keyboard. These teachings are highly leverageable and are easily scaled to accommodate a wide variety of device types and application settings. These teachings are also highly flexible in practice and will accommodate, for example, stowing one, two, or more rows of keys as desired.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

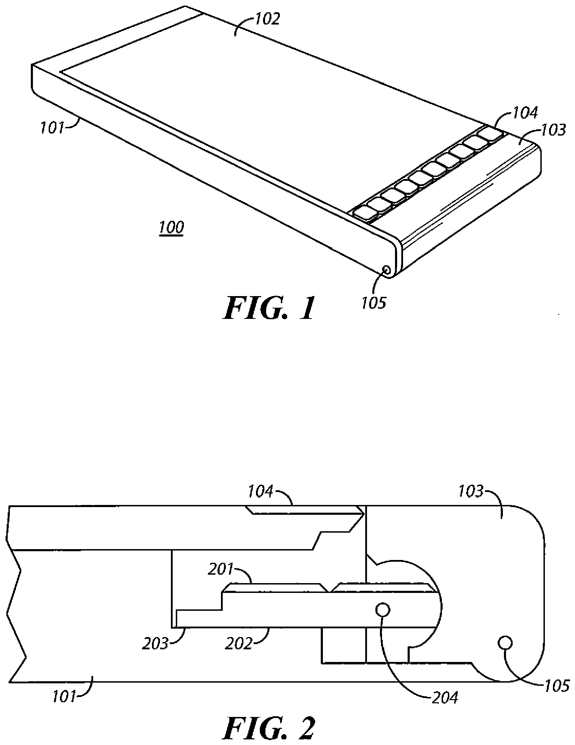

FIG. 1 depicts an illustrative portable electronics device comprising a portable communications device 100. For the sake of illustration this form factor will serve as the basis for describing various approaches that are consistent with the present disclosure. It will be understood, however, that no particular limitations are intended by way of the specifics of these particular examples and that the present teachings are readily applied with any of a variety of other devices and form factors.

In this illustrative example the portable communications device 100 comprises a housing 101 and a relatively large display 102. A cover 103 pivotally couples (via, for example, one or more pivot points 105) to one end of the housing 101. So configured, the cover 103 can be rotated about the pivot point 105 to deploy and reveal a first keyboard portion (not shown in FIG. 1).

In this particular example the portable communications device 100 also includes a second keyboard portion 104 (comprising, for example, a single row of keys) fixed in place between the display 102 and the cover 103. So configured, this second keyboard portion 104 remains deployed regardless of whether the first keyboard portion is in a deployed position or in a non-deployed position. By one approach, the first keyboard portion and the second keyboard portion 104 together comprise a single keyboard (such as a QWERTY keyboard). In such a case and if desired, the keycaps for the second keyboard portion 104 can include illuminatable alphanumeric characters that become illuminated (and hence visible) when the first keyboard portion is deployed and which are non-illuminated (and hence non-visible) when the first keyboard portion is stowed. Also if desired, indicia can be provided on the display 102 to indicate the corresponding functionality for the keys that comprise the second keyboard portion 104 (such as hot-key functionality, short-cut functionality, and so forth) when the first keyboard portion is stowed.

FIG. 2 depicts the first keyboard portion 201 stowed within the housing 101 and the cover 103 in a fully non-deployed position. The keys and rows of keys of the first keyboard portion 201 are disposed on a substantially planar component 202 that pivotally couples at a pivot 204 to the cover 103 proximal a first end of the first keyboard portion 201. A second end 203 of the first keyboard portion 201 rests atop a guide shown in more detail below.

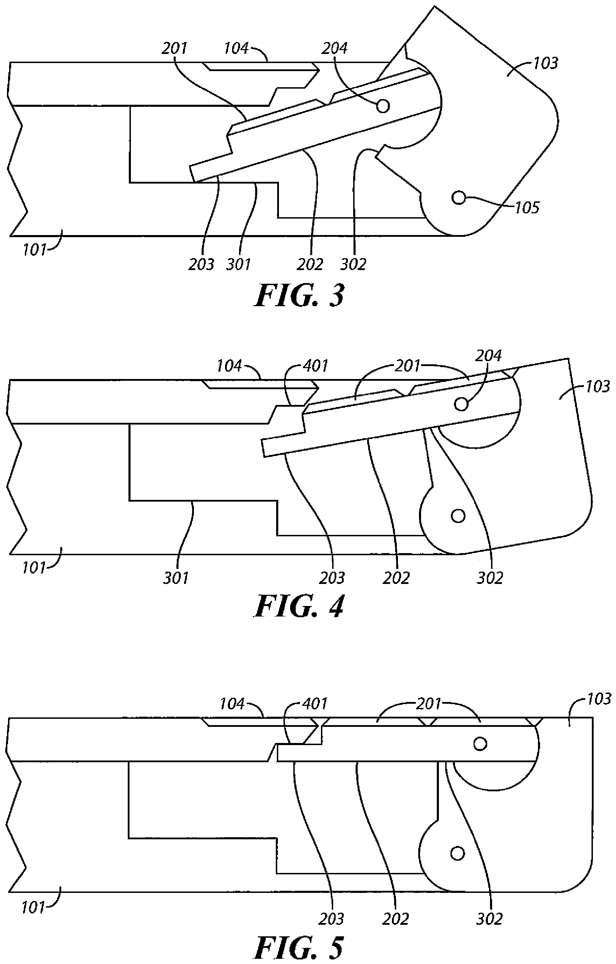

Referring to FIG. 3, when the cover 103 beings to pivot forward about its pivot point 105 the first keyboard portion 201 will rotate about its pivot 204 and will move forwardly with respect to the housing 101 as well. In this illustrative example the second end 203 of the first keyboard portion 201 continues to rest (and slide) on a guide 301 as comprises a part of the housing 101 during at least part, but not all, of the transition from the non-deployed position to a fully-deployed position. In this case the guide 301 is substantially planar and parallel to the longitudinal plane of the housing 101. FIG. 3's view also illustrates that a support surface 302 as comprises a part of the cover 103 moves closer to the underside of the first keyboard portion 201 as the cover 103 pivots.

Referring to FIG. 4, as the cover 103 continues to rotate the second end 203 eventually lifts away from the guide 301 as the first keyboard portion 201 rotates about its pivot 204 with the cover 103. This view also illustrates that the aforementioned support surface 302 as comprises a part of the cover 103 contacts the underside of the first keyboard portion 201 and now helps to continue moving the first keyboard portion 201 towards the fully-deployed position. This view also illustrates that the second end 203 approaches a stop 401 as also comprises a part of the housing 101. In this illustrative example, the stop 401 underlies a portion of the second keyboard portion 104.

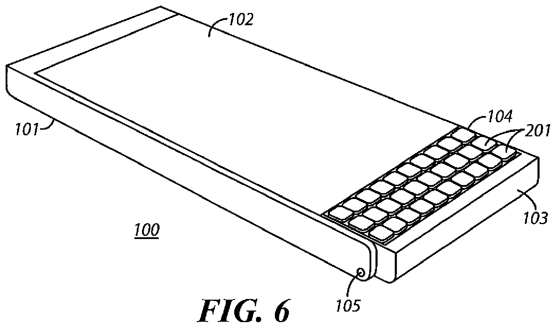

When the cover 103 reaches a final position as shown in FIG. 5 the first keyboard portion 201 reaches a fully-deployed position. At this point the second end 203 now contacts the aforementioned stop 401 as comprises a part of the housing 101. So configured, the first and second keyboard portions 201 and 104 have exposed key surfaces that are substantially coplanar to one another. FIG. 5 also illustrates that the cover's support surface 302 provides vertical support to the first keyboard portion 201. This vertical support serves, in part, to provide firm support in opposition to when the user presses down on the first keyboard portion 201 during use. FIG. 6 provides another view of the first keyboard portion 201 in this fully-deployed position.

So configured, the ordinary footprint of the portable communications device 100 remains relatively small when the first keyboard portion 201 is stowed in the non-deployed position. When the user desires to have access to a complete physical keyboard, however, the user can simply pivot the cover 103 forward as described to quickly, easily, and reliably deploy and expose that keyboard. The first keyboard portion 201 is easily and readily returned to the non-deployed position by simply reversing the deployment process described above.

There are a variety of ways by which this first keyboard portion 201 can communicatively couple with a corresponding control circuit. This can include coupling and decoupling electrically-conductive elements as the first keyboard portion 201 moves between deployed and non-deployed positions, using one or more multi-conductor ribbon cables and/or flexible, optical pathways (such as one or more fiber optic fibers), and so forth. As the present teachings are not particularly sensitive to any particular choices in these regards, further elaboration will not be provided here.

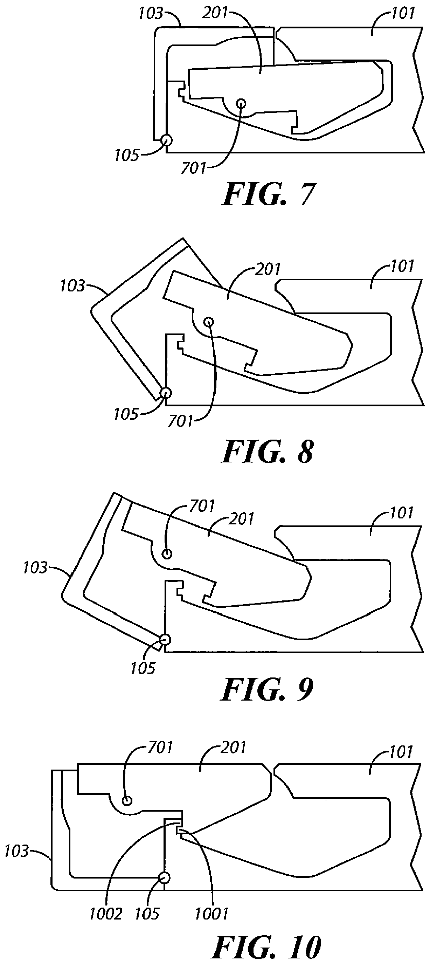

FIGS. 7 through 10 provide another illustrative example in these regards. These figures again depict a pivot point 701 between the first keyboard portion 201 and the cover 103. These figures also depict a pair of hooks 1001 and 1002 on the first keyboard portion 201 and the housing 101, respectively, that engage as shown in FIG. 10 when the first keyboard portion 201 reaches a fully-deployed position.

More specifically, as the cover 103 opens by pivoting about the aforementioned pivot point 105, the first keyboard portion 201 pivots about its pivot point 701 in a clockwise direction (in the illustrated orientation) while also translating forwardly and upwardly. As the cover 103 continues to open, the first keyboard portion 201 continues its travel until the first keyboard portion 201 contacts the main housing 101 and begins to pivot in an opposing direction (i.e., counter clockwise in this illustrated orientation as shown in FIG. 9) about the pivot 701 until such time as the first keyboard portion is substantially planar to the housing 101 and the hooks 1001, 1002 fully engage each other.

Using the approach shown in FIGS. 7 through 10 the first keyboard portion 201 may comprise, if desired, the complete keyboard and may have, for example, one row of keys, two rows of keys, three rows of keys, and so forth as desired. Or, if desired, a permanently exposed keyboard portion can again be included as described above to operate in conjunction with the first keyboard portion 201.

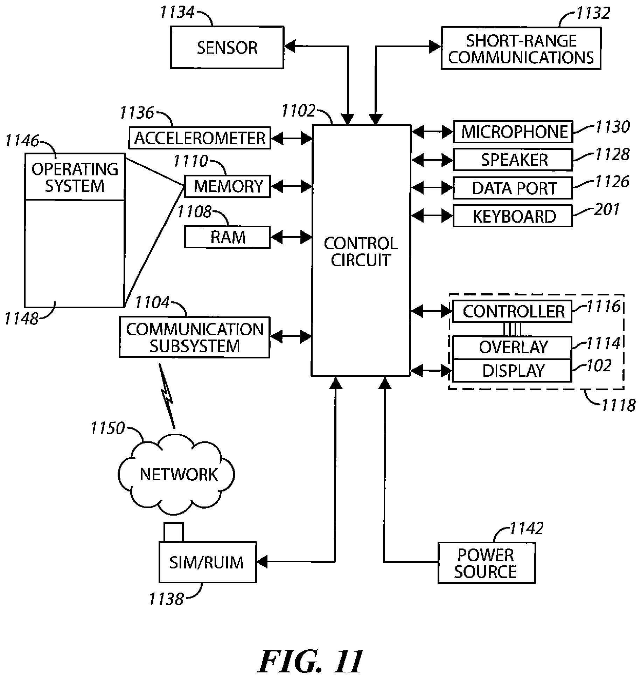

These teachings are suitable for use with a wide variety of apparatuses. This can include, for example, a portable electronic device such as a portable communications device of choice. Referring to FIG. 11, an exemplary portable electronic device includes a control circuit 1102 that controls the overall operation of the portable electronic device. Communication functions, including data and voice communications, are performed through a communication subsystem 1104. The communication subsystem receives messages from and sends messages to a wireless network 1150. The wireless network 1150 may be any type of wireless network, including, but not limited to, data wireless networks, voice wireless networks, and networks that support both voice and data communications. A power source 1142, such as one or more rechargeable batteries or a port to an external power supply, powers the electronic device.

The control circuit 1102 interacts with other elements, such as a Random Access Memory (RAM) 1108, a memory 1110, the aforementioned display 102 along with a touch-sensitive overlay 1114 operably coupled to an electronic controller 1116 that together comprise an optional touch-sensitive display 1118, the aforementioned keypad 200, a data port 1126, a speaker 1128, a microphone 1130, a short-range communication subsystem 1132, and other device subsystems 1134 of choice (such as, for example, one or more sensors that detect when the first keyboard portion 201 are stored and/or deployed).

In this example, the control circuit 1102 also interacts with an accelerometer 1136 that may be utilized to detect direction of gravitational forces or gravity-induced reaction forces. To identify a subscriber for network access, the portable electronic device may utilize a Subscriber Identity Module or a Removable User Identity Module (SIM/RUIM) card 1138 for communication with a network, such as the wireless network 1150. Alternatively, user identification information may be programmed into the memory 1110.

The portable electronic device includes an operating system 1146 and software programs, applications, or components 1148 that are executed by the control circuit 1102 and are typically stored in a persistent, updatable store such as the memory 1110. Additional applications or programs may be loaded onto the portable electronic device through the wireless network 1150, the data port 1126, the short-range communications subsystem 1132, or any other suitable subsystem 1134. The memory 1110 may comprise a non-transitory storage media that stores executable code, when executed, causes one or more functions or actions of choice to be undertaken.

By one approach, the control circuit 1102 can be configured to automatically respond to the deployed and non-deployed state of the keyboard 200 (via, for example) the aforementioned sensor) in any of a variety of ways. As one simple example in these regards, when the first keyboard portion 201 is fully deployed the control circuit 1102 can present, via the display 102, a user interface that presumes data entry via a physical keyboard. When, however, the first keyboard portion 201 is stowed in the non-deployed position as described above, the control circuit 1102 can be configured to automatically present instead a user interface that presumes data entry via the touch-based overlay 1114.

The present disclosure may be embodied in other specific forms without departing from its essential characteristics. As one illustrative example in these regards, any of the keyboards described herein can comprise both mechanical keyboards (that rely upon movement of an individual key (or key component) to detect selection of that particular key) as well as touch-sensitive keyboards (where, for example, the keycaps use a capacitively-sensitive approach to detecting a user's mere touch) that can permit such a keyboard to respond as well to, for example, gestures, swipes, or the like that span multiple keycaps. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus (100) comprising:
a housing (101);
a first keyboard portion (201) that is configured to move between a deployed position and a non-deployed position with respect to the housing, the first keyboard portion having a first end and a second end;
a cover (103) pivotally coupled to the housing and to the first end of the first keyboard portion and configured to at least partially cover the first keyboard portion when the first keyboard portion is in the non-deployed position and to reveal the first keyboard portion when the first keyboard portion is in the deployed position, the cover including a support surface (302) for contacting the first keyboard portion to provide vertical support when the first keyboard portion is in the deployed position, the cover being configured to move the first keyboard portion between the deployed position and the non-deployed position as the cover pivots with respect to the housing.

2. The apparatus of claim 1 further comprising:
a second keyboard portion (104), wherein the first keyboard portion and the second keyboard portion together comprise a single keyboard and wherein the second keyboard portion is disposed for the second keyboard portion to be deployed regardless of whether the first keyboard portion is in the deployed position or the non-deployed position.

3. The apparatus of claim 2 wherein the single keyboard comprises a QWERTY keyboard.

4. The apparatus of claim 1 wherein the first keyboard portion comprises a substantially planar component.

5. The apparatus of claim 1 wherein the first keyboard portion has a second end for resting on a guide within the housing when the first keyboard portion is in the non-deployed position.

6. The apparatus of claim 5 arranged for the second end of the first keyboard portion to slide along the guide during at least part, but not all, of a transition from the non-deployed position to the deployed position.

7. The apparatus of claim 1 arranged for the support surface to contact the first keyboard portion during at least part, but not all, of a transition from the non-deployed position to the deployed position.

8. The apparatus of claim 1 wherein the cover pivotally attaches to the housing at one end of the housing.

9. The apparatus of claim 2 wherein the apparatus is a portable electronic apparatus (100) comprising a display (102) supported by the housing (101).

10. The portable electronic apparatus of claim 9 wherein the second keyboard portion comprises a single row of keys.

11. The portable electronic apparatus of claim 10 wherein the first keyboard portion comprises a plurality of rows of keys.

12. The portable electronic apparatus of claim 9 wherein the first keyboard portion, when the first keyboard portion is in the deployed position, and the second keyboard portion are substantially coplanar with the display.

## Patentansprüche

1. Gerät (100) mit:
einem Gehäuse (101),
einem ersten Tastaturteil (201), der dazu konfiguriert ist, sich zwischen einer eingesetzten Position und einer nicht eingesetzten Position in Bezug auf das Gehäuse zu bewegen, wobei der erste Tastaturteil ein erstes und ein zweites Ende hat,
einem Deckel (103), der drehbar an das Gehäuse und das erste Ende des ersten Tastaturteils gekoppelt ist und dazu konfiguriert ist, den ersten Tastaturteil zumindest teilweise zu bedecken, wenn sich der erste Tastaturteil in der nicht eingesetzten Position befindet, und den ersten Tastaturteil freizulegen, wenn sich der erste Tastaturteil in der eingesetzten Position befindet, wobei der Deckel eine Stützoberfläche (302) zum Kontaktieren des ersten Tastaturteils enthält, um vertikale Stützung bereitzustellen, wenn sich der erste Tastaturteil in der eingesetzten Position befindet, wobei der Deckel dazu konfiguriert ist, den ersten Tastaturteil zwischen der eingesetzten Position und der nicht eingesetzten Position zu bewegen, während sich der Deckel in Bezug auf das Gehäuse dreht.

2. Gerät nach Anspruch 1, ferner mit:
einem zweiten Tastaturteil (104), wobei der erste Tastaturteil und der zweite Tastaturteil zusammen eine einzige Tastatur aufweisen und wobei der zweite Tastaturteil derart ausgelegt ist, dass der zweite Tastaturteil eingesetzt wird, ungeachtet dessen, ob sich der erste Tastaturteil in der eingesetzten oder der nicht eingesetzten Position befindet.

3. Gerät nach Anspruch 2, wobei die einzige Tastatur eine QWERTY-Tastatur aufweist.

4. Gerät nach Anspruch 1, wobei der erste Tastaturteil eine im Wesentlichen ebene Komponente aufweist.

5. Gerät nach Anspruch 1, wobei der erste Tastaturteil ein zweites Ende zum Aufliegen auf einer Führung in dem Gehäuse hat, wenn sich der erste Tastaturteil in der nicht eingesetzten Position befindet.

6. Gerät nach Anspruch 5, das derart angeordnet ist, dass das zweite Ende des ersten Tastaturteils zumindest während eines Teils, aber nicht der Gesamtheit, eines Übergangs von der nicht eingesetzten Position in die eingesetzte Position entlang der Führung gleitet.

7. Gerät nach Anspruch 1, das derart angeordnet ist, dass die Stützoberfläche den ersten Tastaturteil zumindest während eines Teils, aber nicht der Gesamtheit, eines Übergangs von der nicht eingesetzten Position in die eingesetzte Position berührt.

8. Gerät nach Anspruch 1, wobei der Deckel an einem Ende des Gehäuses drehbar an dem Gehäuse angebracht ist.

9. Gerät nach Anspruch 2, wobei das Gerät ein tragbares Elektronikgerät (100) ist, das eine Anzeige (102) aufweist, die von dem Gehäuse (101) gestützt ist.

10. Tragbares Elektronikgerät nach Anspruch 9, wobei der zweite Tastaturteil eine einzige Tastaturreihe aufweist.

11. Tragbares Elektronikgerät nach Anspruch 10, wobei der erste Tastaturteil eine Vielzahl von Tastenreihen aufweist.

12. Tragbares Elektronikgerät nach Anspruch 9, wobei der erste Tastaturteil, wenn sich der erste Tastaturteil in der eingesetzten Position befindet, und der zweite Tastaturteil mit der Anzeige im Wesentlichen komplanar sind.

## Revendications

1. Appareil (100) comprenant :
un boîtier (101) ;
une première partie clavier (201) qui est configurée pour se déplacer entre une position déployée et une position non déployée par rapport au boîtier, la première partie clavier comportant une première extrémité et une seconde extrémité ;
un couvercle (103) accouplé, de manière à pivoter, au boîtier et à la première extrémité de la première partie clavier et configuré pour, au moins partiellement, recouvrir la première partie clavier lorsque la première partie clavier est dans la position non déployée et révéler la première partie clavier lorsque la première partie clavier est dans la position déployée, le couvercle comprenant une surface de support (302) destinée à entrer en contact avec la première partie clavier afin d'offrir un support vertical lorsque la première partie clavier est dans la position déployée, le couvercle étant configuré pour déplacer la première partie clavier entre la position déployée et la position non déployée tandis que le couvercle pivote par rapport au boîtier.

2. Appareil selon la revendication 1, comprenant, en outre :
une seconde partie clavier (104), la première partie clavier et la seconde partie clavier composant conjointement un clavier unique et la seconde partie clavier étant disposée de façon que la seconde partie clavier soit déployée que la première partie clavier se trouve dans la position déployée ou la position non déployée.

3. Appareil selon la revendication 2, dans lequel le clavier unique consiste en un clavier QWERTY.

4. Appareil selon la revendication 1, dans lequel la première partie clavier comprend un élément sensiblement plan.

5. Appareil selon la revendication 1, dans lequel la première partie clavier comporte une seconde extrémité destinée à reposer sur un guide au sein du boîtier lorsque la première partie clavier est dans la position non déployée.

6. Appareil selon la revendication 5, conçu pour que la seconde extrémité de la première partie clavier glisse le long du guide durant au moins une partie, mais pas la totalité, d'une transition de la position non déployée à la position déployée.

7. Appareil selon la revendication 1, conçu pour que la surface de support entre en contact avec la première partie clavier durant au moins une partie, mais pas la totalité, d'une transition de la position non déployée à la position déployée.

8. Appareil selon la revendication 1, dans lequel le couvercle est fixé, de manière à pivoter, au boîtier, au niveau d'une extrémité du boîtier.

9. Appareil selon la revendication 2, l'appareil étant un appareil électronique portable (100) comprenant un affichage (102) supporté par le boîtier (101).

10. Appareil électronique portable selon la revendication 9, dans lequel la seconde partie clavier comprend une seule rangée de touches.

11. Appareil électronique portable selon la revendication 10, dans lequel la première partie clavier comprend une pluralité de rangées de touches.

12. Appareil électronique portable selon la revendication 9, dans lequel la première partie clavier, lorsque la première partie clavier est dans la position déployée, et la seconde partie clavier sont situées sensiblement dans le même plan que l'affichage.
